# EUROPÄISCHE PATENTSCHRIFT

(11) **EP 0 341 459 B1**
(45) Veröffentlichungstag und Bekanntmachung des Hinweises auf die Patenterteilung: **26.07.1995**
(21) Anmeldenummer: 89106977.5
(22) Anmeldetag: 19.04.1989
(51) Int. Cl.: A01B 63/10

(54) **Landwirtschaftlich nutzbare Zugmaschine mit angekoppeltem Anbaugerät**
Agricultural tractor having soil-working implements attached thereto
Véhicule tracteur utilisable dans l'agriculture et auquel est accouplé un instrument de travail

(30) Priorität: 11.05.1988 DE 3816166
(43) Veröffentlichungstag der Anmeldung: 15.11.1989
(73) Patentinhaber: ROBERT BOSCH GMBH, 70442 Stuttgart (DE)
(72) Erfinder: Maichle, Josef, Dipl.-Ing., D-7014 Kornwestheim (DE)

(56) Entgegenhaltungen:
- EP-A- 0 033 923
- DE-A- 3 346 892
- DE-A- 3 446 811

## Beschreibung

### Stand der Technik

Die Erfindung geht aus von einer landwirtschaftlich nutzbaren Zugmaschine, insbesondere Traktor oder Baumaschinen-Fahrzeug, mit über eine Anbauvorrichtung angekoppeltem Anbaugerät und mit einer Einrichtung zur aktiven Dämpfung von Nickschwingungen des Fahrzeugs.

Es ist schon ein solches Fahrzeug aus der DE-OS 34 46 811 bekannt, bei dem an einem Traktor über ein Dreipunktgestänge ein Pflug angelenkt ist und mit Hilfe der elektrohydraulischen Regeleinrichtung zur Pflugverstellung eine aktive Schwingungsdämpfung des Anbaugeräts in dessen Aushubstellung erreichbar ist. Mit einem solchen System zur dynamischen Stabilisierung der Bewegungen des Fahrzeugs können dessen Nickschwingungen reduziert werden, so daß bei ausgehobenem Anbaugerät hohe Transportgeschwindigkeiten und eine große Lenksicherheit möglich sind. Für eine derartige Schwingungsdämpfung werden bevorzugt der Kraftregelkreis und sein zugehöriger Kraftsensor eingesetzt. Bei dieser Bauweise können nun ungünstige Betriebsbedingungen auftreten, bei denen sich durch eine ungenaue Signalermittlung Einflüsse einstellen, welche die Güte der Schwingungsdämpfung beeinträchtigen und auch zu vergrößerter Bewegungsamplitude des Anbaugeräts führen können. So können vom Kraftsensor im Lenker ermittelte Horizontalkräfte sich verändern, wenn bei Kurvenfahrt und/oder bei seitlichem Pendeln des Anbaugeräts ein mit dem Lenker verbundenes Seitenführungsgestänge einen Teil der horizontalen Kräfte auf das Gehäuse des Traktors übertragen und damit die Genauigkeit der Meßergebnisse beeinträchtigen. Dabei gibt es auch Schleppertypen, bei denen als Seitenführungsgestänge nicht starre Stangen, sondern auch Zugketten verwendet werden. Auch ist es bei manchen Schleppertypen üblich, für diese Seitenführung zusätzliche gehäusefeste Abstützflächen oder Nocken vorzusehen, die ein seitliches Ausbrechen der Lenker begrenzen. Zum Berücksichtigen von Wankschwingungen werden ebenfalls Hinweise gegeben.

Ferner ist aus der DE-OS 33 46 892 ein Fahrzeug mit einem gelenkig befestigten Anbaugerät bekannt, bei der ebenfalls mit Hilfe der elektrohydraulischen Hubwerks-Regeleinrichtung die Nickschwingungen des Traktors gedämpft werden sollen. Eine Dämpfung soll hier primär dadurch erreicht werden, daß das Anbaugerät in vertikaler Richtung räumlich annähernd ruhig gehalten wird. Zum Einfluß und zur Beherrschung von Querschwingungen des Pfluges relativ zum Traktor, werden bei diesem Fahrzeug keine Hinweise gegeben.

Ferner ist aus der EP-A1-0 033 923 ein Traktor mit einer elektrohydraulischen Regeleinrichtung zur Pflugverstellung bekannt, bei welcher der Unterlenker mit Hilfe eines Kraftmeßbolzens am Gehäuse des Traktors gelagert ist. In der Regel wird mit der Summe aus beiden Kraftmeßbolzen-Signalen die Regeleinrichtung betrieben. Eine aktive Schwingungsdämpfung ist hier jedoch nicht vorgesehen. Ungünstige Verhältnisse für die Kraftermittlung können besonders dann auftreten, wenn die Anlenkpunkte der beiden Unterlenker am Gehäuse des Traktors relativ nahe beieinander liegen und die nach hinten V-förmig auskragenden Unterlenker über schräg verlaufende Seitenführungsgestänge am Traktorrahmen abgestützt sind, so daß z.B. bei Kurvenfahrten ein Teil der Horizontalkräfte auf das Traktorgehäuse übertragen wird.

Aufgabe der Erfindung ist es, bei einer gattungsbildenden Zugmaschine mit einem Seitenführungsglied die Funktionsfähigkeit der Nickschwingungsdämpfungseinrichtung für solche Situationen zu verbessern, in denen das Seitenführungsglied beansprucht wird, d.h. bei Kurvenfahrt der Zugmaschine mit seitlich pendelndem bzw. bei querschwingenden Anbaugerät.

Gelöst wird diese Aufgabe ausgehend von der gattungsbildenden Zugmaschine durch die kennzeichnenden Merkmale des Anspruchs 1.

Die erfindungsgemäße landwirtschaftlich nutzbare Zugmaschine mit den kennzeichnenden Merkmalen des Hauptanspruchs hat den Vorteil, daß die Funktion der aktiven Schwingungsdämpfung bei Transportfahrt des Fahrzeugs mit ausgehobenem Anbaugerät auch bei einer Kurvenfahrt und/oder seitlichem Pendeln des Anbaugeräts funktionsfähig und sicher bleibt. Dies geschieht in einfacher und vorteilhafter Weise dadurch, daß das zur aktiven Dämpfung verwendete Signal im Kraftregelkreis, das bei Kurvenfahrt einen Einbruch erleidet, in seinem Einfluß wenigstens kurzzeitig überbrückt wird. Im Interesse einer optimalen Ausnutzung der Aushubhöhe können ferner die Stellbewegungen am Hubwerk möglichst klein gehalten werden, was auch zu geringerer Belastung der Bauteile führt. Ferner läßt sich die Einrichtung mit relativ geringem Aufwand nur in der Elektronik realisieren. Dieser Einbruch des Summensignals der Kraftsensoren, der unabhängig von der Art der Seitenführungsmittel wie starre Stange, Zugkette oder z.B. gehäusefeste Abstützflächen auftritt, hat keinen störenden Einfluß mehr auf die Schwingungsdämpfung. Diese Funktion ist auch deswegen wesentlich, weil der Einbruch des Summensignals umso größer ist, je höher die mittlere Aushubhöhe gewählt wird.

Durch die in den Unteransprüchen aufgeführten Maßnahmen sind vorteilhafte Weiterbildungen und Verbesserungen der im Hauptanspruch angegebenen Zugmaschine möglich. Eine besonders einfache, kostengünstige und wirksam arbeitende Einrichtung wird möglich, wenn gemäß den Ansprüchen 2 und 3 das zum Ermitteln des dynamischen Kraftanteils verwendete Tiefpaßfilter so ausgebildet wird, daß seine Zeitkonstante abhängig von der Lage des Hubwerks verändert wird. Damit kann auch die Stellbewegung am Hubwerk möglichst klein gehalten werden, was einer optimalen Ausnutzung der Aushubhöhe zugute kommt. Weiterhin ist es besonders zweckmäßig, wenn die Einrichtung auf der Zugmaschine gemäß den Ansprüchen 4 und 5 ausgebildet wird, so daß der Einfluß des Lageregelkreises beim Überschreiten bestimmter Grenzwerte durch die Regelabweichung wesentlich verstärkt wird, was sich mit einem Regler mit geknickter Kennlinie besonders zweckmäßig realisieren läßt. Auch damit können störende Einflüsse bei Kurvenfahrt auf die aktive Schwingungsdämpfung wesentlich vermindert werden. Weitere besonders vorteilhafte Ausgestaltungen ergeben sich aus den Ansprüchen 6 bis 9, wobei es besonders vorteilhaft ist, die erforderlichen Funktionen gemäß Anspruch 9 in Digitaltechnik mit einem Mikroprozessor auszuführen. Nach den Ansprüchen 12 und 13 werden vorteilhafte Verfahren zur aktiven Schwingungsdämpfung bei Kurvenfahrten und vergleichbaren Einflüssen vorgeschlagen.

### Zeichnung

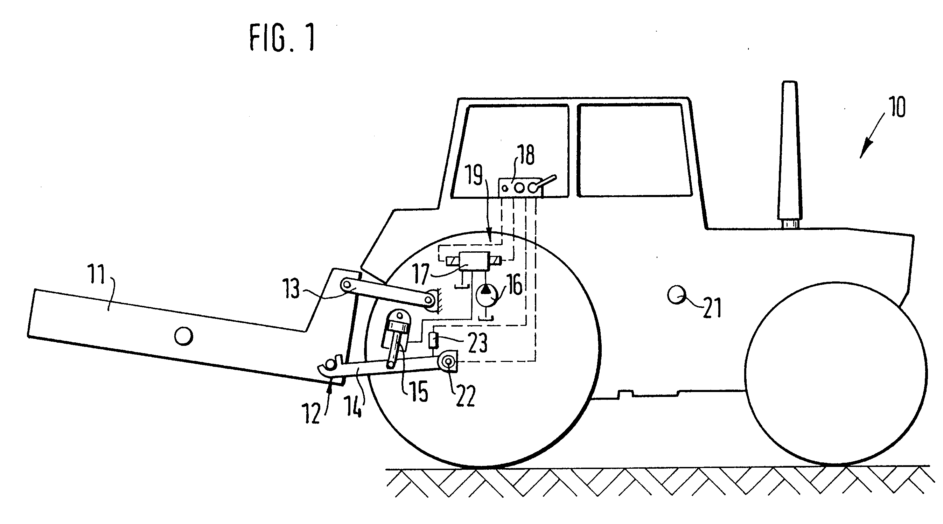

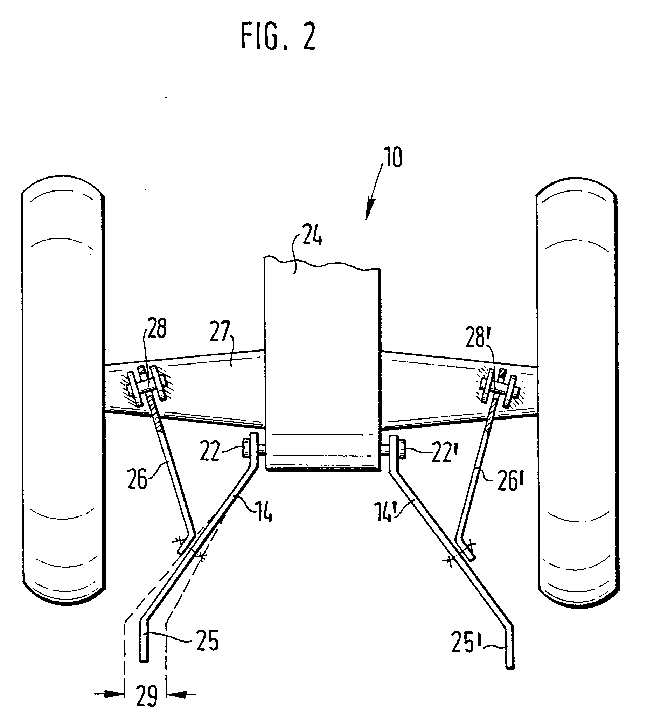

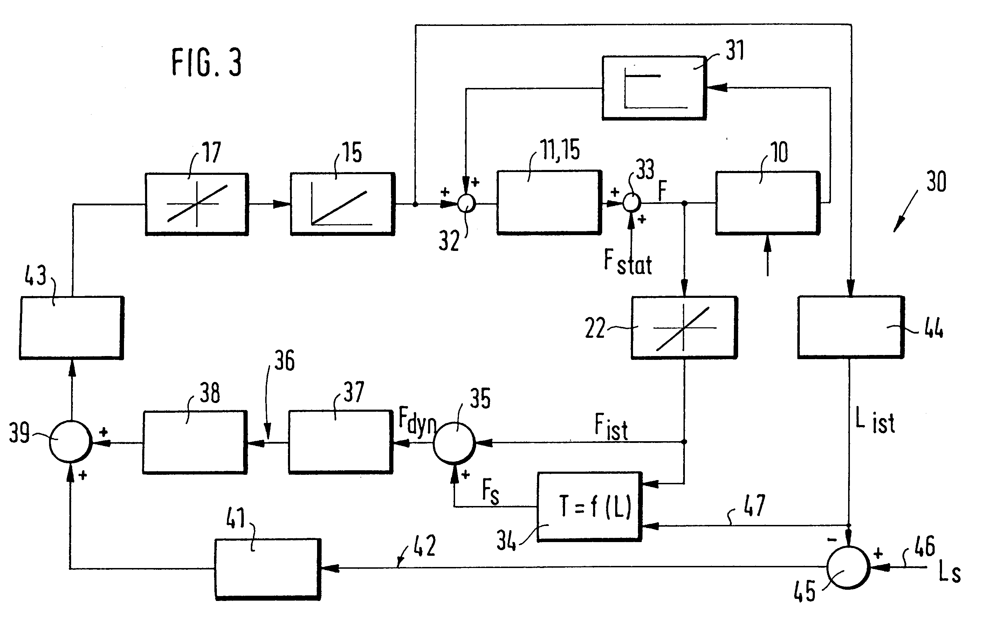

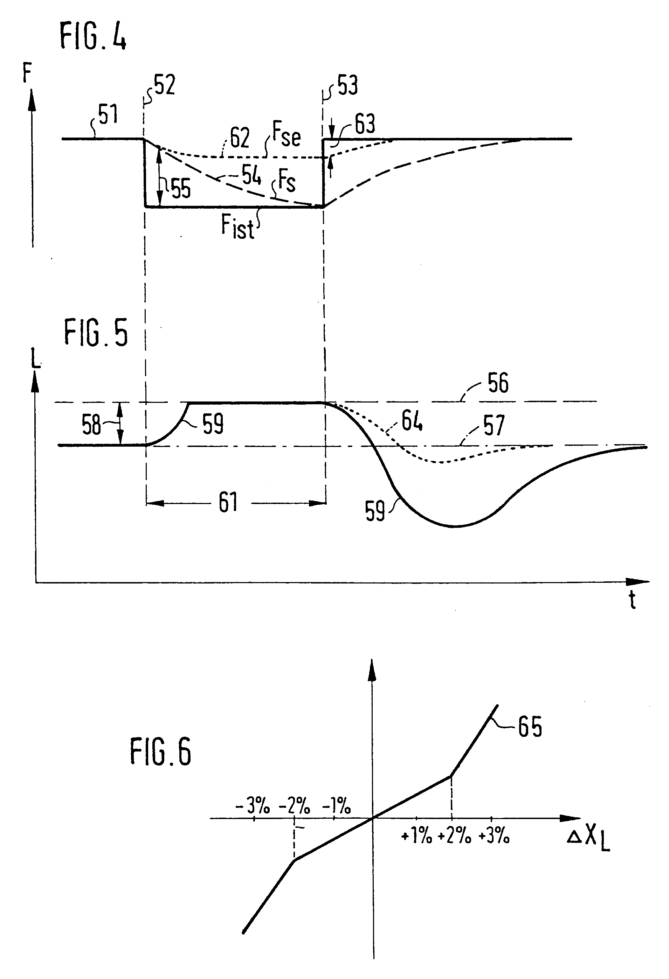

Ein Ausführungsbeispiel der Erfindung ist in der Zeichnung dargestellt und in der nachfolgenden Beschreibung näher erläutert. Es zeigen die Figur 1 einen Traktor mit angekoppeltem Anbaugerät in Aushabstellung und mit einer Einrichtung zur aktiven Schwingungsdämpfung bei Kurvenfahrt, Figur 2 eine teilweise Untersicht des Traktors nach Figur 1, Figur 3 ein Blockschaltbild für die Einrichtung zur Schwingungsdämpfung nach Figur 1 in vereinfachter Darstellung, Figur 4 und 5 die Signalverläufe bei Kurvenfahrt im Schwingungsdämpfungsbetrieb und Figur 6 die Kennlinie des Reglers im Lageregelkreis.

### Beschreibung des Ausführungsbeispiels

In der Figur 1 ist als landwirtschaftlich nutzbare Zugmaschine ein Traktor 10 mit einem heckseitig befestigten Anbaugerät 11 dargestellt, das beispielsweise als Pflug ausgebildet sein kann. Das Anbaugerät 11 ist dabei in an sich bekannter Weise über eine Anbauvorrichtung, die als Dreipunkt-Gestänge 12 ausgebildet sein kann, mit Oberlenker 13 und Unterlenker 14 am Traktor 10 höhenverstellbar angelenkt. Zur Verstellung des Anbaugeräts 11 greift am Unterlenker 14 ein hydraulischer Kraftheber 15 an, der in einen hydraulischen Kreis mit einer Pumpe 16 und einem elektrohydraulischen Regelventil 17 geschaltet ist. Das Regelventil 17 wird über ein elektronisches Steuergerät 18 angesteuert, das ebenso wie das Regelventil 17 und das Dreipunkt-Gestänge 12 mit dem Kraftheber 15 Teil einer elektrohydraulischen Hubwerksregeleinrichtung 19 ist. Mit Hilfe dieser Regeleinrichtung 19 kann beispielsweise ein als Pflug ausgebildetes Anbaugerät 11 nicht nur in Betriebsstellungen in verschiedenen Regelungsarten betrieben werden, sondern das Anbaugerät 11 aus der Betriebsstellung heraus in die gezeichnete Aushabstellung verfahren werden, in der es mit einer begrenzten Amplitude um eine mittlere Aushabstellung herum bewegt werden kann. Die Regeleinrichtung 19 steuert dabei die Bewegungen des als Tilgermasse verwendeten Anbaugeräts 11 derart, daß die Schwingungen des Traktors 10, insbesondere dessen Nickbewegungen um seine horizontal liegende Schwingachse 21 aktiv gedämpft werden. Die Regeleinrichtung 19 verarbeitet zu diesem Zweck die Istwerte von mehreren Sensoren, wozu einmal der Unterlenker 14 über einen an sich bekannten Kraftmeßbolzen 22 am Traktor 10 angelenkt ist. Der Kraftmeßbolzen 22 ermittelt die vom Unterlenker 14 übertragene Horizontalkraft und meldet dazu proportionale elektrische Signale an das elektronische Steuergerät 18. Ferner ist ein Lagesensor 23 vorgesehen, welcher von der Lage des Anbaugeräts 11 relativ zum Traktor 10 abhängige Signale an das Steuergerät 18 meldet.

Die Figur 2 zeigt einen Teil des Traktors 10 nach Figur 1 in einer Untersicht, in der die doppelte Anordnung des Unterlenkers 14 deutlich sichtbar wird. Die doppelte Anordnung wird dabei mit dem gleichen Bezugszeichen, jedoch mit dem Index ' versehen. Die beiden Unterlenker 14, 14' sind über ihre jeweiligen Kraftmeßbolzen 22, 22' an einem Gehäuse 24 des Traktors 10 schwenkbar gelagert. Die von den Kraftmeßbolzen 22, 22' gebildeten Anlenkpunkte liegen, bedingt durch die Bauart des Traktorgehäuses 24, relativ nahe beieinander.

Demgegenüber liegen die Kupplungspunkte 25, 25' für das Anbaugerät 11 durch die auskragenden Unterlenker 14, 14' weiter auseinander. Ferner ist jeder Unterlenker 14, 14' durch eine Seitenführungsstange 26, 26' an der gehäusefesten Hinterachse 27 des Traktors 10 abgestützt. Die Seitenführungsstangen 26, 26' sind in ihren Ankoppelpunkten 28, 28' auf der Hinterachse 27 jeweils mit einem Langloch versehen, wodurch jeder Unterlenker 14, 14' an seinem Kupplungspunkt 25 bzw. 25' eine maximale seitliche Bewegung um einen Abstand 29 an den Kupplungspunkten 25 ausführen kann.

Die Figur 3 zeigt als Blockschaltbild in vereinfachter Darstellung eine Einrichtung 30 zur dynamischen Stabilisierung der Bewegung des Fahrzeugs 10, also zur aktiven Schwingungsdämpfung, wie sie in der Hubwerksregeleinrichtung 19 nach Figur 1 integriert ist.

Dabei bildet das System Anbaugerät 11, Kraftheber 15 zusammen mit dem Traktor 10 eine schwingungsfähige Einheit, die durch Stöße von außen auf den Traktor 10 zu Schwingungen angeregt werden kann. Der Nickwinkel des Traktors 10 um seine Schwingachse 21 wird über verschiedene kinematische Faktoren 31 verändert und auf einen ersten Summenpunkt 32 zurückgeführt. An einem zweiten Summenpunkt 33 zwischen Anbaugerät 11 und Traktor 10 wird eine von der Masse des Anbaugeräts 11 herrührende, statische Kraft Fₛₜₐₜ zugeführt, so daß die gesamte Kraft F auf den Kraftmeßbolzen 22 einwirkt. Mit dem Kraftmeßbolzen 22 der Hubwerksregeleinrichtung 19 wird somit zugleich das Signal für die Bewegung des als Tilgermasse dienenden Anbaugeräts 11 gewonnen. Der Kraftmeßbolzen 22 liefert als Ausgangssignal eine elektrische Spannung, die proportional zur Größe der jeweiligen Kraft ist, insbesondere zu der vom Unterlenker 14 übertragenen Horizontalkraft. Mit Hilfe eines Tiefpaßfilters 34 werden anschließend die dynamischen und die statischen Anteile voneinander getrennt, so daß an einem dritten Summenpunkt 35 ein elektrisches Ausgangssignal gewonnen wird, das dem dynamischen Anteil entspricht und somit proportional zur Kraft F_{dyn} ist, die vor allem durch Stöße auf den Traktor 10 z.B. infolge von Straßenunebenheiten, hervorgerufen wird. Diese zum dynamischen Kraftanteil proportionalen Signale dienen als Eingangsgröße für den Kraftregelkreis 36 und werden einem Proportional-Regler 37 eingegeben. Das Ausgangssignal des ersten Reglers 37 wird über einen Totzonen-Vergleicher 38 zu einem vierten Summenpunkt 39 geführt, an dem zusätzlich das Ausgangssignal eines zweiten Reglers 41 in einem Lageregelkreis 42 anliegt. Das Ausgangssignal vom vierten Summenpunkt 39 wird über eine Schalteinrichtung 43 für Totzonen-Vergleich geführt und wirkt auf das Regelventil 17, das seinerseits den Kraftheber 15 beeinflußt. Das lageabhängige Ausgangssignal vom Kraftheber 15 wirkt einerseits über den ersten Summenpunkt 32 auf das Anbaugerät 11 und andererseits auf den Lagesensor 44. Das elektrische Ausgangssignal des Lagesensors 44 wird einerseits in einem fünften Summenpunkt 45 mit einem Lagesollwert 46 verglichen und die dabei gebildete Regelabweichung der Lage dem zweiten Regler 41 eingegeben. Zusätzlich wirkt der Lage-Istwert über eine Wirkverbindung 47 auf das Tiefpaßfilter 34 in einer Weise ein, daß dessen Zeitkonstante sich abhängig von diesem Lageeinfluß ändert, wie dies im Nachfolgenden noch näher beschrieben wird.

Fährt der Traktor 10 bei ausgehobenem Anbaugerät 11, wie die Figur 1 näher zeigt, über unebenes Gelände, so treten Nick- und Vertikalschwingungen des Gespanns auf, die infolge der Massenträgheit des Anbaugeräts 11 zu Beschleunigungskräften führen, welche von den Kraftmeßbolzen 22, 22' gemessen werden. Diese Kraftmeßbolzen 22, 22' liefern dabei proportionale Signale zu den an ihnen auftretenden Horizontalkräften. Mit der Summe der Signale aus beiden Kraftmeßbolzen 22, 22' betreibt die elektrohydraulische Hubwerksregeleinrichtung 19 eine aktive Schwingungsdämpfung, indem das angelenkte Anbaugerät 11 in geeigneter Weise bewegt wird. Dabei wird bei ruhiger Geradeaus-Fahrt die gesamte Horizontalkraft, die im Unterlenker 14, 14' durch das Gewicht des Anbaugerätes 11 entsteht, auf die Kraftmeßbolzen 22, 22' geführt. Diese normale aktive Schwingungsdämpfung wird als an sich bekannt vorausgesetzt.

Im Unterschied zur ruhigen Geradeaus-Fahrt wirken bei einer Kurvenfahrt des Traktors 10 Einflüsse auf die Einrichtung 30 zur aktiven Schwingungsdämpfung, die einen optimalen Betrieb beeinträchtigen. So bricht bei einer Kurvenfahrt das ausgehobene Anbaugerät 11 infolge seiner Massenträgheit seitlich aus und wird von den Seitenführungsstangen 26, 26' abgestützt. Dabei übernehmen diese Seitenführungsstangen einen Teil der von den Unterlenkern 14, 14' übertragenen Horizontalkräfte. Dabei werden die auf die Kraftmeßbolzen 22, 22' übertragenen Horizontalkräfte bei der üblichen Geometrie und Kinematik des Dreipunkt-Gestänges 12 deutlich reduziert. Die Kraftmeßbolzensignale brechen damit plötzlich um einen bestimmten Betrag ein. Solche kurzen Kraftsignaleinbrüche können auch dann auftreten, wenn der Traktor 10 bei einer Geradeaus-Fahrt Wankschwingungen ausführt, wobei ein seitliches Hin- und Herschaukeln des Anbaugeräts 11 auftritt. Diese vorübergehenden Einbrüche im Summensignal der Kraft können den Schwingungsdämpfungsbetrieb empfindlich stören, wenn keine Gegenmaßnahmen ergriffen werden. Diese Zusammenhänge bei Kurvenfahrt sollen anhand von Figur 4 und Figur 5 näher erläutert werden, in denen die Signalverläufe im einzelnen dargestellt sind.

Es zeigen die Figur 4 den Signalverlauf der Kraft F bei Kurvenfahrt des Traktors 10 im Schwingungsdämpfungsbetrieb, während die Figur 5 den zugehörigen Signalverlauf der Aushubhöhe bzw. der Lage über der Zeit aufzeichnet. In Figur 4 zeigt eine durchgezogene erste Linie 51 den Verlauf des Istwertes der Kraft F während einer Kurvenfahrt. Bei einem Kurvenbeginn 52 bricht der von dem Kraftmeßbolzen 22 gemessene Istwert der Summenkraft F plötzlich ein, weil ein Teil der Horizontalkräfte von einer Seitenführungsstange 26, 26' aufgenommen wird. Dieser Krafteinbruch bleibt für die Dauer der Kurvenfahrt erhalten, wobei diese Dauer z.B. in der Größenordnung von 3 bis 6 Sekunden liegen kann. Am Kurvenende 53 wird die Seitenführungsstange 26, 26' wieder entlastet, so daß der Kraft-Istwert wieder seinen alten Wert einnimmt.

Wie aus Figur 4 in Verbindung mit Figur 3 näher hervorgeht, ändert sich im Gegensatz zum dynamischen Kraft-Istwert der im Tiefpaßfilter 34 gebildete, an dessen Ausgang anstehende Kraft-Sollwert Fₛ nur langsam. Der Signalverlauf dieses Kraft-Sollwertes ist in Figur 4 durch eine zweite, gestrichelte Linie 54 dargestellt. Der Regler 37 im Kraftregelkreis 36 reagiert auf diese bei Kurvenbeginn auftretende Regeldifferenz 55, die sich aus dem Verlauf der Kurven 51 und 54 ergibt, mit einem Ausheben des Anbaugeräts 11 bis zu seinem Anschlag. Wie Figur 5 näher zeigt, ist dieser Anschlag erreicht, wenn der Lage-Istwert einer Position obere Endlage entspricht, wie dies in Figur 5 durch die Begrenzungslinie 56 dargestellt ist. Das Anbaugerät 11 wurde dabei aus einer mittleren Aushubstellung 57 heraus angehoben, um welche das Anbaugerät 11 im Schwingungsdämpfungsbetrieb nach beiden Seiten hin schwingen kann. Der Abstand zwischen der mittleren Aushubstellung 57 und der oberen Begrenzungslinie 56 kann dabei eine Größenordnung von ca. 3 % der gesamten Aushubhöhe ausmachen.

Am Kurvenende 53 entsteht durch die sprunghafte Erhöhung des Kraft-Istwertes 51 eine große negative Regeldifferenz entsprechend der Größe 55. Diese gemäß der zweiten Linie 54 sich nur langsam abbauende Regeldifferenz veranlaßt den Regler 37, das Anbaugerät 11 weit abzusenken. In Figur 5 ist dies durch die durchgezogene Kurve 59 für den Lage-Istwert dargestellt, die im Anschluß an das Kurvenende 53 erheblich unter die mittlere Aushubstellung 57 abfällt. Dieses tiefe Absinken der Anbauvorrichtung 11 im Schwingungsdämpfungsbetrieb ist nicht nur störend, sondern kann auch dann gefährlich werden, wenn das Anbaugerät 11 auf dem Boden aufschlagen könnte. Zudem sollen aus Sicherheitsgründen die Hubamplituden bei der Schwingungsdämpfung möglichst klein gehalten werden.

Um das übermäßige Ausschwingen gemäß Kurve 59 nach dem Kurvenende 53 zu vermeiden, wird die Erkenntnis ausgenutzt, daß eine Verringerung der Regeldifferenz 55 während der Kurvenfahrt 61 zu kleineren Schwingungsamplituden führen muß. Dies läßt sich auf relativ einfache Weise dadurch erreichen, daß die Zeitkonstante T im Tiefpaßfilter 34 in Abhängigkeit von der Größe des Lage-Istwertes verändert wird, wozu eine Wirkverbindung 47 vorgesehen ist. Besonders günstig läßt sich dies erreichen, wenn das elektronische Steuergerät 18 in Digitaltechnik ausgeführt wird und einen Mikroprozessor aufweist, bei dem sich die veränderliche Zeitkonstante T softwaremäßig realisieren läßt. Dabei wird nun die Zeitkonstante T so gewählt, daß sie ihren Nennwert einnimmt, wenn der über die Wirkverbindung 47 gemeldete Lage-Istwert der mittleren Aushubstellung 57 in Figur 5 entspricht. Kleiner als dieser Nennwert kann die Zeitkonstante nicht werden. Nimmt dagegen der Lage-Istwert zu, so wächst auch die Zeitkonstante T. Erreicht das Hubwerk seine obere Endlage gemäß der Begrenzungslinie 56, so ist auch die Zeitkonstante T des Tiefpaßfilters 34 sehr groß. Bei abnehmender Lage von 56 nach 57 nimmt auch die Zeitkonstante T wieder ab.

Durch diese Manipulation der Zeitkonstante T im Tiefpaßfilter 34 des Kraftregelkreises 36 wird erreicht, daß während der Kurvenfahrt 61 der effektive Kraft-Sollwert Fₛₑ kaum abfällt und somit nicht nach der gestrichelten zweiten Linie 54 verläuft, sondern nach der punktiert gezeichneten dritten Linie 62. Bei Kurvenende 53 ist damit die zweite Regeldifferenz 63 relativ klein, wodurch ein übermäßiges Senken des Hubwerks bei Kurvenende 53 verhindert wird. Entsprechend der kleineren zweiten Regeldifferenz 63 verläuft das Istwertsignal der Lage in Figur 5 nach einer zweiten, punktiert gezeichneten Kurve 64. Wie Figur 5 deutlich zeigt, ist die Amplitude der zweiten Kurve 64 relativ zur mittleren Aushubstellung 57 wesentlich geringer als diejenige der ersten Kurve 59.

Die Einrichtung 30 kann daher die Funktion der aktiven Schwingungstilgung bei Kurvenfahrten des Traktors 10 und/oder bei seitlichem Pendeln des Anbaugerätes 11 erheblich wirksamer und sicherer ausführen. Zugleich kann dadurch die Aushubhöhe des Hubwerks optimaler ausgenutzt werden, da die Stellbewegungen bei der Schwingungstilgung insgesamt kleiner gehalten werden.

Um bei der Schwingungstilgung die Hubwerksamplituden weiter zu begrenzen, ist der zweite Regler 41 im Lageregelkreis 42 besonders ausgebildet. In diesem unterlagerten Lageregelkreis 42 wird der Lagesollwert 46 im Schwingungsdämpfungsbetrieb durch die Größe der mittleren Aushubstellung 57 vorgegeben. Als Lage-Istwert dient die aktuelle Position des Hubwerks, wie es am Ausgang des Lagesensors 44 abgegriffen wird. Wie die Figur 6 näher zeigt, in der die Ausgangsgröße des zweiten Reglers 41 in Abhängigkeit von der eingegebenen Regeldifferenz der Lage dargestellt ist, weist der zweite, proportional arbeitende Regler 41 eine geknickte Kennlinie 65 auf. Die Kennlinie 65 des Reglers 41 wird dabei so gewählt, daß die Verstärkung im unterlagerten Lageregelkreis 42 erheblich zunimmt, wenn sich der Lage-Istwert mehr als 2 % von der mittleren Aushubstellung 57 entfernt, wobei der Gesamthub des Hubwerks mit 100 % gleichgesetzt wird. Auf diese Weise wird ein Ausbrechen des Lage-Istwertes zusätzlich erschwert. Im Normalbetrieb, wenn also die Regelabweichung der Lage unterhalb von 2 % bleibt, ist die Lageverstärkung relativ klein, so daß der für die Schwingungstilgung entscheidende Kraftregelkreis 36 entsprechend empfindlich bleibt.

Die Ausbildung des zweiten Reglers 41 mit geknickter Kennlinie 65 kann auch losgelöst von der veränderlichen Zeitkonstante im Kraftregelkreis 36 für sich allein verwendet werden, um die aktive Schwingungsdämpfung bei Kurvenfahrten positiv zu beeinflussen. Die Kombination beider Maßnahmen erlaubt jedoch eine besonders leistungsfähige Schwingungsdämpfung am Traktor 10 bei Kurvenfahrten und vergleichbaren Schwingungsfällen.

Selbstverständlich sind Änderungen an der gezeigten Ausführungsform möglich. Obwohl die Ausbildung dieser Maßnahmen bei einer Regeleinrichtung in Digitaltechnik besonders zweckmäßig ist, ist ihre Anwendung auf eine elektrohydraulische Regeleinrichtung mit Analogtechnik nicht ausgeschlossen. Ebenso sind diese Maßnahmen auch auf andere Zugmaschinen wie z.B. Mähdräscher, anwendbar, wenn vergleichbare Schwingungsfälle auftreten; dies gilt auch, wenn das Anbaugerät frontal oder seitlich angebaut wird. Auch bei Baufahrzeugen können vergleichbare Schwingungsfälle auftreten.

Selbstverständlich ist die Einrichtung nicht begrenzt auf die gezeigte Traktorbauart, bei der das Seitenführungsgestänge als starre Stangen ausgebildet ist und Zug- und Druckkräfte übertragen kann. Der gleiche Einbruch des Summensignals tritt auch auf, wenn anstelle der starren Stangen für die Seitenführung Zugketten verwendet werden. Entsprechendes gilt, wenn zur Seitenführung gehäusefeste Abstützflächen oder Nocken vorgesehen werden, welche die seitliche Bewegung der Lenker begrenzen; alle diese Mittel werden als Seitenführungsglieder bezeichnet. Ferner können die Kraftmeßbolzen auch weiter auseinanderliegen, als dies in Figur 2 gezeigt ist. Ebenso können je nach Schleppertyp auch die Lenker parallel zueinander verlaufen und z.B. an der Hinterachse angelenkt sein.

Obwohl die Einrichtung besonders vorteilhaft bei Kraftmeßbolzen anwendbar ist, wäre es auch möglich an deren Stelle andere Kraftsensoren zu verwenden, bei denen bei Kurvenfahrt des Traktors und/oder seitlichem Schwingen des Anhaugeräts ähnliche Signalverläufe mit einem Einbruch des Summensignals auftreten.

## Patentansprüche

1. Landwirtschaftlich nutzbare Zugmaschine (10), insbesondere Traktor oder Baumaschinen-Fahrzeug, mit über eine Anbauvorrichtung (12) angekoppeltem Anbaugerät (11) und mit einer Einrichtung (30) zur aktiven Dämpfung von Nickschwingungen des Fahrzeugs, die einen zur Bewegung des Anbaugeräts (11) dienenden Kraftheber (15) und eine auf Signale ansprechende Regeleinrichtung (19) aufweist, mit der das Anbaugerät (11) im Bereich seiner Aushubstellung in Abhängigkeit von den Schwingungen des Fahrzeugs (10) während der Fahrt bewegbar ist und mit wenigstens einem die Signale erzeugenden Kraftsensor (22), der in einem in der Regeleinrichtung (19) ausgebildeten Kraftregelkreis (36) liegt, dadurch gekennzeichnet, daß ein Lenker (14, 14') der Anbauvorrichtung (12) und damit der Schwingungsdämpfungs-Einrichtung (30) über ein Seitenführungsglied (26, 26') an dem Gehäuse (24) des Fahrzeugs (10) abgestützt ist, daß der Kraftsensor (22, 22') in den Kraftfluß des Lenkers (14, 14') zwischen dessen Anlenkpunkt am Gehäuse (24) und dem Abstützpunkt des Seitenführungsgliedes (26, 26') geschaltet ist und daß die Einrichtung (30) Mittel (34, 47; 41, 65) aufweist, die bei einer Kurvenfahrt des Fahrzeugs (10) mit seitlich pendelndem bzw. querschwingendem Anbaugerät (11) die infolge von durch das Seitenführungsglied (26, 26') verursachten Kraftsignaleinbrüchen auf den Betrieb der aktiven Schwingungsdämpfungs-Einrichtung (30) störend wirkenden Einflüsse verringert, indem das zur aktiven Dämpfung verwendete Signal des Kraftregelkreises (36) in seinem Einfluß wenigstens kurzzeitig überbrückt wird, wodurch die am Ende einer Kurvenfahrt bzw. Querschwingung auftretende Regeldifferenz (63) im Kraftregelkreis (36) kleiner als die ansonsten durch den Signaleinbruch verursachte Regeldifferenz gehalten wird.

2. Zugmaschine nach Anspruch 1, bei der die Regeleinrichtung einen Lageregelkreis (42) neben dem der aktiven Schwingungsdämpfung zugeordneten Kraftregelkreis (36) aufweist, dadurch gekennzeichnet, daß die Mittel einen im Kraftregelkreis (36) liegenden Tiefpaßfilter (34) aufweisen, dessen Zeitkonstante (T) abhängig von den Istwert-Signalen eines Lagesensors (44) veränderbar ist.

3. Zugmaschine nach Anspruch 2, dadurch gekennzeichnet, daß das Tiefpaßfilter (34) bei einer der mittleren Aushubstellung (57) entsprechenden Lage einen Nennwert als Zeitkonstante T aufweist, dessen Wert bei Auslenkung des Hubwerks (12) in Richtung oberer Endlage (56) vergrößert wird und bei Auslenkung unterhalb der mittleren Aushubstellung (57) unverändert bleibt.

4. Zugmaschine nach einem oder mehreren der Ansprüche 1 bis 3, mit einem im unterlagerten Lageregelkreis (42) angeordneten Regler (41), dadurch gekennzeichnet, daß der Regler (41) außerhalb eines vorbestimmten, inneren Arbeitsbereichs einen größeren Verstärkungsfaktor (65) aufweist.

5. Zugmaschine nach Anspruch 4, dadurch gekennzeichnet, daß der Regler als Proportional-Regler (41) mit geknickter Kennlinie (65) ausgebildet ist.

6. Zugmaschine nach einem oder mehreren der Ansprüche 1 bis 5, dadurch gekennzeichnet, daß der Kraftsensor ein den Lenker (14) lagernder Kraftmeßbolzen (22, 22') ist.

7. Zugmaschine nach einem oder mehreren der Ansprüche 1 bis 6, dadurch gekennzeichnet, daß das Fahrzeug ein Traktor (10) mit einem über ein Dreipunktgestänge (12) angelenkten Arbeitsgerät (11), insbesondere Pflug, ist.

8. Zugmaschine nach einem oder mehreren der Ansprüche 1 bis 7, dadurch gekennzeichnet, daß die Anbauvorrichtung zwei Unterlenker (14, 14') aufweist, die jeweils über einen Kraftmeßbolzen (22, 22') gehäusefest gelagert sind und daß jeder Unterlenker (14, 14') über ein Seitenführungsglied (26, 26') gehäusefest abgestützt ist.

9. Zugmaschine nach einem der Ansprüche 1 bis 8, dadurch gekennzeichnet, daß das elektronische Steuergerät (18) der Regeleinrichtung (19) in Digitaltechnik ausgebildet ist und einen Mikroprozessor aufweist.

10. Zugmaschine nach einem oder mehreren der Ansprüche 1 bis 9, dadurch gekennzeichnet, daß das Seitenführungsglied als Stange (26, 26') ausgebildet ist.

11. Zugmaschine nach einem oder mehreren der Ansprüche 1 bis 9, dadurch gekennzeichnet, daß das Seitenführungsglied als Zugkette ausgebildet ist.

12. Verfahren zur dynamischen Stabilisierung der Nickschwingungen eines Fahrzeugs (10), insbesondere eines Traktors, wobei am Fahrzeug (10) ein Anbaugerät (11) gelenkig angebaut und durch einen in einem Kraftregelkreis (36) liegenden Kraftheber (15) relativ zum Fahrzeug (10) verstellbar ist in Abhängigkeit eines von den Schwingungen des Fahrzeugs (10) abhängigen Signals eines Kraftsensors (22), der die Horizontalkräfte in einem Lenker (14, 14') abgreift, der zusätzlich über ein Seitenführungsglied (26, 26') fahrzeugfest abgestützt ist, dadurch gekennzeichnet, daß während des bei Kurvenfahrt des Fahrzeugs mit seitlich pendelndem bzw. querschwingendem Anbaugerät (11) durch das Seitenführungsglied (26, 26') verursachten Signaleinbruchs des Kraftsensors (22, 22') durch eine vom Lage-Istwert abhängige Änderung der Zeitkonstante T einer Tiefpaßfilterfunktion im Kraftregelkreis (36) die auftretende Regeldifferenz (63) am den Signaleinbruch beendenden Kurvenende (53) auf einem Bruchteil der ansonsten durch den Signaleinbruch verursachten Regeldifferenz gehalten wird.

13. Verfahren nach Anspruch 12, dadurch gekennzeichnet, daß in einem dem Kraftregelkreis (36) unterlagerten Lageregelkreis (42) bei Überschreiten vorgegebener Grenzwerte der Regelabweichung der Lage der Verstärkungsfaktor (65) des Reglers (41) erhöht wird.

## Claims

1. Traction engine (10) which can be used for agricultural purposes, in particular a tractor or construction-site vehicle, having an implement (11) which is coupled by means of an attachment device (12) and having a device (30) for actively damping pitching motions of the vehicle, which device (30) has a power lifter (15) which serves to move the implement (11) and a control device (19) which responds to signals and with which the implement (11) can be moved in the region of its lifting position as a function of the oscillations of the vehicle (10) while travelling, and with at least one force sensor (22) which produces the signals and is located in a power control circuit (36) which is constructed in the control device (19), characterized in that a link (14, 14') of the attachment device (12), and thus of the oscillation damping device (30), is supported on the housing (24) of the vehicle (10) by means of a lateral guide element (26, 26'), in that the force sensor (22, 22') is connected into the power flux of the link (14, 14') between its point of attachment to the housing (24) and the supporting point of the lateral guide element (26, 26'), and in that the device (30) has means (34, 47; 41, 65) which, as the vehicle (10) goes around a bend with the implement (11) oscillating from side to side or swinging laterally, reduce the influences which have a disruptive effect on the operation of the active oscillation damping device (30) and result from the glitches in the power signal caused by the lateral guide element (26, 26'), in that the influence of the power control circuit (36) signal which is used for active damping is at least briefly bypassed, as a result of which the control difference (63) occurring at the end of cornering or lateral oscillation, in the power control circuit (36) is kept smaller than the control difference which would be otherwise caused by the signal glitch.

2. Traction engine according to Claim 1, in which the control device has a position control circuit (42) in addition to the power control circuit (36) assigned to the active oscillation damping, characterized in that the means have a low pass filter (34) which is located in the power control circuit (36) and whose time constant (T) can be varied as a function of the actual value signals of a position sensor (44).

3. Traction engine according to Claim 2, characterized in that the low pass filter (34) has a nominal value as time constant T at a position corresponding to the average lifting position (57), which nominal value is increased when the lifting mechanism (12) is moved in the direction of the upper limit position (56) and remains unchanged when it is moved below the average lifting position (57).

4. Traction engine according to one or more of Claims 1 to 3, with a controller (41) which is arranged in the subordinate position control circuit (42), characterized in that the controller (41) has a larger amplification factor (65) outside a predetermined, inner working range.

5. Traction engine according to Claim 4, characterized in that the controller is constructed as a proportional controller (41) with a bent characteristic curve (65).

6. Traction engine according to one or more of Claims 1 to 5, characterized in that the force sensor is a force measuring bolt (22, 22') which bears the link (14).

7. Traction engine according to one or more of Claims 1 to 6, characterized in that the vehicle is a tractor (10) with an implement (11), in particular a plough, coupled via a three-point linkage (12).

8. Traction engine according to one or more of Claims 1 to 7, characterized in that the attachment device has two lower links (14, 14') which are each mounted fixed to the housing by means of a force measuring bolt (22, 22'), and in that each lower link (14, 14') is supported fixed to the housing via a lateral guide element (26, 26').

9. Traction engine according to one of Claims 1 to 8, characterized in that the electronic control unit (18) of the control device (19) is constructed using digital technology and has a microprocessor.

10. Traction engine according to one or more of Claims 1 to 9, characterized in that the lateral guide element is constructed as a rod (26, 26').

11. Traction engine according to one or more of Claims 1 to 9, characterized in that the lateral guide element is constructed as a tension chain.

12. Method for dynamically stabilizing the pitching motions of a vehicle (10), in particular of a tractor, an implement (11) being attached to the vehicle (10) in an articulated fashion and being adjustable relative to the vehicle (10) by means of a power lifter (15) which is located in a power control circuit (36) as a function of a signal, dependent on the oscillations of the vehicle (10), of a force sensor (22) which taps the horizontal forces in a link (14, 14') which is additionally supported fixed to the vehicle via a lateral guide element (26, 26'), characterized in that during the signal glitch of the force sensor (22, 22') which is caused by the lateral guide element (26, 26') as the vehicle is going around a bend with an implement (11) which is oscillating from side to side or swinging laterally, the control difference (63) occurring at the end (53) of the bend which terminates the signal glitch is kept to a fraction of the control difference which would otherwise be caused by the signal glitch by changing the time constant T of a low pass filter function in the power control circuit (36) as a function of the actual position value.

13. Method according to Claim 12, characterized in that the amplification factor (65) of the controller (41) is increased in a position control circuit (42), which is subordinate to the power control circuit (36), when prescribed limit values of the control deviation of the position are exceeded.

## Revendications

1. Véhicule tracteur à usage agricole (10), notamment tracteur ou engin de construction, comportant un outil porté(11), attelé par l'intermédiaire d'un dispositif d'attelage (12), ainsi qu'une installation (30) pour amortir de manière active les oscillations de tangage du véhicule, comprenant un vérin (15) servant à déplacer l'outil porté (11) et une installation de régulation (19) répondant à des signaux, l'outil porté (11) étant déplacé par cette installation de régulation, dans la zone de sa position de relevage en fonction des oscillations du véhicule (10), pendant le déplacement, et au moins un capteur dynamométrique (22) créant les signaux, ce capteur étant intégré à un circuit de régulation de force (36) appartenant à l'installation de régulation (19), caractérisé en ce qu'un bras (14, 14') du dispositif d'attelage (12) et ainsi de l'installation d'amortissement des oscillations (30), s'appuie par un élément de guidage latéral (26, 26') sur le carter (24) du véhicule (10), le capteur dynamométrique (22, 22') étant situé dans le chemin des efforts du bras (14, 14') entre son point d'articulation sur le carter (24) et le point d'appui de l'élément de guidage latéral (26, 26'), l'installation (30) comportant des moyens (34, 47; 41, 65) qui, lorsque le véhicule (10) décrit une trajectoire courbe et que son outil porté (11) effectue des mouvements pendulaires latéraux ou des oscillations transversales qui, du fait des effondrements du signal de force provoqués par l'élément de guidage latéral (26, 26'), diminuent de manière gênante l'influence sur le fonctionnement de l'installation (30) d'amortissement actif des oscillations, en ce que le signal du circuit de régulation de force (36) utilisé pour l'amortissement actif voit son influence court-circuitée au moins pendant une courte durée, et la différence de régulation (63) qui se produit à la fin d'un déplacement en courbe ou des oscillations transversales dans le circuit de régulation de force (36), est maintenue plus faible que la différence de régulation qui serait par ailleurs provoquée par l'effondrement du signal.

2. Véhicule tracteur selon la revendication 1, dont l'installation de régulation comporte un circuit de régulation de position (42) en plus du circuit de régulation de force (36) associé à l'amortissement actif des oscillations, caractérisé en ce que les moyens comprennent un filtre passe-bas (34) faisant partie du circuit de régulation de force (36) et dont la constante de temps (T) est variable en fonction des signaux de valeur réelle d'un capteur de position (44).

3. Véhicule tracteur selon la revendication 2, caractérisé en ce que le filtre passe-bas (34) présente une constante de temps (T) à la valeur nominale pour une position correspondant à la position moyenne de relevage (57), la valeur de cette constante étant augmentée lorsque le dispositif de levage (12) se déploie en direction de sa position de fin de course supérieure (56), alors que cette constante de temps reste inchangée pour un débattement en dessous de la position moyenne de relevage (57).

4. Véhicule tracteur selon l'une ou plusieurs des revendications 1 à 3 avec un régulateur (41) prévu dans le circuit de régulation de position secondaire (42), caractérisé en ce que le régulateur (41) présente un coefficient d'amplification (65) plus grand à l'extérieur d'une zone de travail intérieure, prédéterminée.

5. Véhicule tracteur selon la revendication 4, caractérisé en ce que le régulateur est un régulateur proportionnel (41) ayant une courbe caractéristique (65) présentant un coude.

6. Véhicule tracteur selon l'une ou plusieurs des revendications 1 à 5, caractérisé en ce que le capteur de force est un goujon dynamométrique (22, 22') servant de palier au bras (14).

7. Véhicule tracteur selon l'une ou plusieurs des revendications 1 à 6, caractérisé en ce que le véhicule est un tracteur (10) équipé d'un outil (11) notamment d'une charrue, porté, monté par l'intermédiaire d'un attelage en trois points (12).

8. Véhicule tracteur selon l'une ou plusieurs des revendications 1 à 7, caractérisé en ce que le dispositif de montage comporte deux bras inférieurs (14, 14') montés sur le carter du tracteur chaque fois par l'intermédiaire d'un goujon dynamométrique (22, 22') et chaque bras inférieur (14, 14') s'appuie solidairement sur le carter par l'intermédiaire d'un élément de guidage latéral (26, 26').

9. Véhicule tracteur selon l'une des revendications 1 à 8, caractérisé en ce que l'appareil de commande électronique (18) de l'installation de régulation (19) est réalisé en technique numérique et comprend un microprocesseur.

10. Véhicule tracteur selon l'une ou plusieurs des revendications 1 à 9, caractérisé en ce que l'élément de guidage latéral est une barre (26, 26').

11. Véhicule tracteur selon l'une ou plusieurs des revendications 1 à 9, caractérisé en ce que l'élément de guidage latéral est en forme de chaîne de traction.

12. Procédé de stabilisation dynamique des oscillations de tangage d'un véhicule (10), notamment d'un tracteur, le véhicule (10) étant équipé d'un outil porté (11), monté de manière articulée, et cet outil se réglant par rapport au véhicule (10) à l'aide d'un vérin (15) faisant partie d'un circuit de régulation de force (36), en fonction d'un signal d'un capteur dynamométrique (22) dépendant des oscillations du véhicule (10), ce capteur détectant les efforts horizontaux induits dans un bras (14, 14'), s'appuyant en outre solidairement sur le véhicule par l'intermédiaire d'un élément de guidage latéral (26, 26'), caractérisé en ce que, pendant l'effondrement du signal du capteur de force (22, 22 ') provoqué par l'organe de guidage latéral (26, 26') au cours du déplacement en courbe du véhicule dont l'outil porté (11) oscille latéralement ou transversalement, une variation de la constante de temps (T) dépendant de la valeur réelle de la position pour une fonction de filtre passe-bas du circuit de régulation de force (36), maintient la différence de régulation (63) qui se produit au moment de la fin (53) de la trajectoire courbe qui termine l'affaissement du signal, à une fraction de la différence de régulation provoquée par ailleurs par l'effondrement du signal.

13. Procédé selon la revendication 12, caractérisé en ce que l'on augmente le coefficient d'amplification (65) du régulateur (41) dans un circuit de régulation de position (42), secondaire, faisant partie du circuit de régulation de force (36), lorsque la déviation de régulation de la position dépasse vers le haut des valeurs limites prédéterminées.
